# EUROPEAN PATENT SPECIFICATION

(11) **EP 2 755 922 B1**
(45) Date of publication and mention of the grant of the patent: **30.05.2018**
(21) Application number: 12830954.9
(22) Date of filing: 17.09.2012
(51) Int. Cl.: C02F 1/467, C25B 1/26, A01N 59/00, C25B 9/00

(54) **METHODS FOR GENERATING GERMICIDAL COMPOSITIONS**
VERFAHREN ZUR ERZEUGUNG KEIMTÖTENDER ZUSAMMENSETZUNGEN
PROCÉDÉS DE PRODUCTION DE COMPOSITIONS GERMICIDES

(30) Priority: 16.09.2011 US 201161535829 P; 13.02.2012 US 201261598153 P
(43) Date of publication of application: 23.07.2014
(73) Proprietor: Zurex Pharmagra, LLC, Middleton, Wisconsin 53562 (US)
(72) Inventor: DURHAM, Carmine, J., Middleton, Wisconsin 53562 (US); MORGAN, R., Andrew, Middleton, Wisconsin 53562 (US); PAWLAK, Michael, C., Middleton, Wisconsin 53562 (US)
(74) Representative: Algemeen Octrooi- en Merkenbureau B.V.
(86) International application number: PCT/US2012/055778
(87) International publication number: WO 2013/040569

(56) References cited:
- EP-A1- 2 191 721
- WO-A1-03/049749
- WO-A1-2011/120701
- WO-A2-2006/033762
- WO-A2-2006/135814
- WO-A2-2009/013019
- US-A1- 2004 055 896
- US-A1- 2007 138 020
- US-A1- 2008 008 621
- US-A1- 2008 200 355
- US-A1- 2010 116 688
- US-A1- 2010 183 745
- US-A1- 2010 307 757

## Description

### FIELD OF THE INVENTION

The present invention relates to the use of a closed system according to claim 1 and a method for generating germicidal compositions according to claim 5 for pre-milking udder preparation purposes and post-milking teat purposes.

### BACKGROUND

Today's consumer demands that the product they are provided be of the highest quality and safe to eat or drink. The production and processing of safe, nutritional, high quality milk and food starts on the farm. As farms get larger their ability to defend and control their operations against pest and harmful micro-organisms becomes even more critical. Pure water, animal and premise hygiene are indispensable in a well-managed operation (e.g., agricultural setting).

WO2011/120701 discloses a system for producing a germicidal solution by electrochemically conversing a sodium chloride solution in an electric cell, removing hydrogen from the cathode cell and then storing the generated solution in a chamber. The germicidal solution is then used as such or combined with a medical agent.

US2007/0138020 relates to a system comprising a sodium chloride solution, water, an electrolytic cell and at least one chamber, wherein the electrolytic cell is configured to receive the sodium chloride solution mixed with the water, and to generate a germicidal composition, wherein the chamber is configured to receive the germicidal composition generated with the electrolytic cell.

US2010/11668 discloses a system for producing a germicidal solution by electrochemically conversing a sodium chloride solution in an electrolytic cell from which hydrogen is discharged. The obtained product is used in phosphate buffered saline solutions.

WO2009/013019 discloses compositions comprising electrochemically produced germinal solutions in combination with various ingredients, such as medicinal agents, surfactants or hydrotropes, citric acid.

WO2006/033762 discloses a system for generating a germicidal solution by electrochemically conversing a sodium chloride solution in an electric cell from which hydrogen is removed and wherein an additional agent is added to the solution from a separate chamber.

EP2191721 describes the addition of additional agents to electrochemically produced germicidal solutions for various disinfectant purposes.

Improved and more comprehensive on-farm hygiene tools leading to a safe and wholesome agriculturally-based products (e.g., milk and food products) and healthy animals for the generation of such products are needed.

### SUMMARY OF THE INVENTION

The present invention relates to the use of a closed system according to claim 1 and a method for generating germicidal compositions according to claim 5 for pre-milking udder preparation purposes and post-milking teat purposes.

The systems and methods of the present invention provide new levels of hygiene protection, providing solutions created on-site, with superior germicidal efficacy at a fraction of the cost of current germicidal alternatives. For example, the systems and methods of the present invention provide the ability to create a concentrated germicidal solution, to be used in a multitude of on-farm applications, at a fraction of the cost of common disinfectants. Moreover, described are compositions configured for specific disinfectant purposes.
Accordingly, the present invention provides a closed system for providing on-site creating of a germicidal composition, said system comprising a sodium chloride solution mixed with water, an electrolytic cell, additional agents, and at least one chamber, wherein the electrolytic cell is configured to generate the germicidal composition comprising a combination of chlorine, hypochlorine, hypochlorous acid and chlorine dioxide,
wherein the electrolytic cell is configured to a) receive the sodium chloride solution mixed with the water, b) remove hydrogen from the sodium chloride solution mixed with the water, and c) generate a germicidal composition and wherein the chamber is configured to receive the germicidal composition generated with the electrolytic cell.

The systems are not limited to a particular manner of generating the germicidal composition. In some embodiments, the germicidal composition is generated through removal of hydrogen from the sodium chloride solution mixed with the water. t

The germicidal composition can be measured in parts per million (PPM) of free available chlorine (FAC). The combination of chlorines (e.g., a combination of chlorine, hypochlorite, hypochlorous acid and chlorine dioxide) has been proven to be many times more effective than common chlorine bleach (sodium hypochlorite), and is safe when applied on skin tissue. The PPM of FAC in a germicidal composition can be modified to meet the needs of a wide range of dairy sizes and desired uses / needs.The system and methods of the present invention may be capable of generating germicidal composition at any desired amount and/or concentration (e.g., in an amount from 125,000 PPM of FAC up to 25,000,000 PPM of FAC within a 24 hour production period) (e.g., in a range from 1,440,000 PPM of FAC (e.g., 180 gallons of 8,000 PPM of FAC) up to 4,800,000 PPM of FAC within a 24 hour production period)).

The system further comprises two or more additional agents, wherein the two or more additional agents are stored in a manner permitting combination of a generated germicidal composition with any combination (e.g., via blending / mixing) of two or more of the additional agents.

The combination is configured to occur automatically. The system may be configured to provide any programmed amount of the two or more additional agents for purposes of combination.

The additional agents are described to be water, a detergent polymer (e.g., Acusol), a surfactant (e.g., tomadol ethoxylate) (e.g, an ionic surfactant) (e.g., a non-ionic surfactant) (e.g., a cationic quarternary ammonion compound (e.g., cetylpyridinium chloride (e.g., Ammonyx)) (e.g., alkyl dimethyl benzylammonium chloride (e.g., BTC-835)) (e.g., an amphoteric surfactant (e.g., KDC-3) (e.g., amphoteric LH)), a hydrotrope (e.g., sodium xylene sulfonate), a dye (e.g., tartrazine (dye keyacid tart yellow)) (e.g., blue dye) (e.g., green grams), citric acid, an emollient (e.g., propylene glycol) (e.g., urea), and a sequestration agent (e.g., chelating agent (e.g., versene 100 / sequestrene 30A)) (e.g., potassium hydroxide (e.g., caustic potash)) (e.g., sodium hydroxide (e.g., caustic soda)) (e.g., magnesium hydroxide (e.g., flogel)).

The system may generate a combination of a germicidal composition and water, a detergent polymer (e.g., Acusol), a surfactant (e.g., tomadol ethoxylate) (e.g, an ionic surfactant) (e.g., a non-ionic surfactant) (e.g., a cationic quarternary ammonion compound (e.g., cetylpyridinium chloride (e.g., Ammonyx)) (e.g., alkyl dimethyl benzylammonium chloride (e.g., BTC-835)) (e.g., an amphoteric surfactant (e.g., KDC-3) (e.g., amphoteric LH)), a hydrotrope (e.g., sodium xylene sulfonate), and a dye (e.g., tartrazine (dye keyacid tart yellow)) (e.g., blue dye) (e.g., green grams). Such a combination is configured for pre-milking udder preparation purposes.

The system may generates a combination of a germicidal composition and water, a detergent polymer (e.g., Acusol), citric acid, a surfactant (e.g., tomadol ethoxylate) (e.g, an ionic surfactant) (e.g., a non-ionic surfactant) (e.g., a cationic quarternary ammonion compound (e.g., cetylpyridinium chloride (e.g., Ammonyx)) (e.g., alkyl dimethyl benzylammonium chloride (e.g., BTC-835)) (e.g., an amphoteric surfactant (e.g., KDC-3) (e.g., amphoteric LH)), an emollient (e.g., propylene glycol) (e.g., urea), a sequestration agent (e.g., chelating agent (e.g., versene 100 / sequestrene 30A)) (e.g., potassium hydroxide (e.g., caustic potash)) (e.g., sodium hydroxide (e.g., caustic soda)) (e.g., magnesium hydroxide (e.g., flogel)), and a dye (e.g., tartrazine (dye keyacid tart yellow)) (e.g., blue dye) (e.g., green grams). Such a combination is configured for post-milking teat purposes.

The present invention further describes post-milking teat solutions having a noticeable color when applied to a tissue (e.g., a teat) (e.g., blue, red, yellow, black, orange). The color may be configured to remain noticeable when applied to a tissue for an extended period of time (e.g., 1 minute, 10 minutes, 20 minutes, 1 hour, 6 hours, 12 hours, 1 day, etc.).

The system is a closed system (e.g., for maintaining a sterile setting) (e.g., for maintaining a controlled setting).

In some embodiments, the systems further comprise a processor running an algorithm, configured regulate the generation of the germicidal composition, wherein the algorithm is configured to regulate the combination of the germicidal composition with the two or more additional agents. The algorithm may be configured to present alerts regarding the system. Examples of such alerts include germicidal composition amount levels, time periods, identifications of used additional agents, system malfunctions, additional agent amount levels, sterility contaminations, amount levels of the germicidal composition combined with the additional agents.

The present invention also provides a method for generating compositions comprising germicidal pre-milking udder or post-milking teat compositions combined with additional agents with such a system.

Also described are compositions generated with such systems and/or methods.

### BRIEF DESCRIPTION OF THE DRAWINGS

Figure 1 depicts a process involving Electro-Chemical Activation, which involves the process of passing a sodium chloride solution, and treated water (1) through an electrolytic cell (2) in order to generate, by electro-chemical energy conversion, a germicidally active solution (3).
Figure 2 shows a system for generating ECAcept Concentrate (see, e.g., Brine Tank and Process Tank), and combining it with additional agents (see, e.g., Additive 1A, Additive 2A, and Additive 3A) via the mixing station to create modified ECAcept Concentrate (see, e.g., 1B, 2B, 3B).

### DETAILED DESCRIPTION

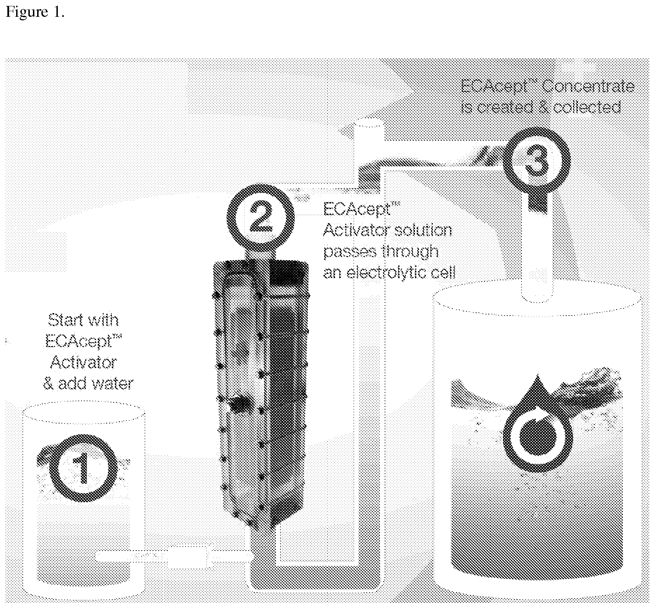

Electro-Chemical Activation (ECA) can be used. There is no limitation to a particular technique or mechanism associated with ECA. ECA involves the process of passing a sodium chloride solution, and treated water (1) through an electrolytic cell (2) in order to generate, by electro-chemical energy conversion, a germicidally active solution (3) (see, e.g., Figure 1)..

The particular sodium chloride solution is not limited. The sodium chloride solution can be ECAcept Activator solution. There is no limitation to a particular ECAcept Activator solution. he ECAcept Activator solution may comprise an aqueous, purified sodium chloride solution. The sodium chloride solution may be a brine solution. There is no limitation to particular concentration and/or purification parameters for the sodium chloride solution.

There is no limitation to a particular electrolytic cell. The electrolytic cell may be configured to efficiently and reliably generate chlorine from a base solution (e.g., a base solution comprising a sodium chloride solution). The electrolytic cell may be configured to liberate hydrogen from a base solution (e.g., a base solution comprising a sodium chloride solution). The electrolytic cell may be configured for passive and/or active hydrogen removal. The electrolytic cell may be configured for high velocity electrolyte flow, sodium chloride solution conductivity control, full wave D.C. rectification, recirculating cell loop, and/or no cell electrode penetrations. The electrolytic cell is configured to generate a solution comprising chlorine, hypochlorite, hypochlorous acid and chlorine dioxide from a sodium chloride solution. The electrolytic cell may be as described or similar to the electrolytic cells described in U.S. Patent No. 7,897,022, U.S. Patent Application Serial Nos. 13/026,947 and 13/026,939.

There is no limitation to a particular germicidally active solution. The germicidally active solution may be ECAcept Concentrate. With regard to the systems and methods described herein there is no limitation to a particular ECAcept Concentrate. The ECAcept Concentrate solution can be, for example, a combination of chlorine, hypochlorite, hypochlorous acid and chlorine dioxide.

Described is the provision of compositions comprising ECAcept Concentrate. The ECAcept Concentrate is not limited to particular measurement and/or concentration parameters. The ECAcept Concentrate may be measured in parts per million (PPM) of free available chlorine (FAC). The combination of chlorines has been proven to be many times more effective than common chlorine bleach (sodium hypochlorite), and is safe when applied on skin tissue. The PPM of FAC in a ECAcept Concentrate can be modified to meet the needs of a wide range of dairy sizes and desired uses / needs. The system and methods described herein are capable of generating ECAcept Concentrate at any desired amount and/or concentration (e.g., in an amount from 125,000 PPM of FAC up to 25,000,000 PPM of FAC within a 24 hour production period) (e.g., in a range from 1,440,000 PPM of FAC (e.g., 180 gallons of 8,000 PPM of FAC) up to 4,800,000 PPM of FAC within a 24 hour production period).

The ECAcept Concentrate is not limited to a particular use or function. The ECAcept Concentrate is a powerful disinfectant. Indeed, experiments demonstrated that generated ECAcept Concentrate is 10 times more efficient at the same dilution rate at killing harmful micro-organisms than standard commercial bleach (e.g., 5.25% - 12.5% sodium hypochlorite), without having caustic, corrosive, skin harming characteristics. The ECAcept Concentrate is not limited to particular disinfectant uses. The ECAcept Concentrate can be used for animal hygiene disinfectant purposes. For example, the ECAcept Concentrate can be used for pre and/or post milking hygiene purposes. For example, , the ECAcept Concentrate can be used for hoof treatment. The ECAcept Concentrate can be used for premise hygiene purposes. The ECAcept Concentrate can be used for cleaning, disinfecting, and/or sanitizing the structural premise (e.g., the exterior walls, platforms, etc.). The ECAcept Concentrate can be used for equipment cleaning, disinfecting, and/or sanitizing. The ECAcept Concentrate can be used for cleaning, disinfecting, and/or sanitizing the calf hutches, treatment, and/or hospital areas. The ECAcept Concentrate can be used for cleaning, disinfecting, and/or sanitizing the cleaning-in-place (CIP) locations. The ECAcept Concentrate can be used for cleaning, disinfecting, and/or sanitizing the laundry locations. The ECAcept Concentrate can be used for water treatment. The ECAcept Concentrate can be used for iron and/or manganese remediation from a water source. The ECAcept Concentrate can be used for biofilm removal from a water source. The ECAcept Concentrate can be used for disinfecting a water source. The ECAcept Concentrate can be generated with a relatively neutral pH so as to keep the solution safe for skin contact (e.g., contact with cow teats and skin tissue).

Following its generation, the ECAcept Concentrate can further be modified for enhanced purposes and/or uses. The ECAcept Concentrate can be further modified through combination with additional agents.

Pre-milking udder preparation solutions can be generated by combining the ECAcept Concentrate with additional agents. A pre-milking udder preparation solution can be generated by combining the ECAcept Concentrate with water, a detergent polymer (e.g., Acusol), a surfactant (e.g., tomadol ethoxylate) (e.g, an ionic surfactant) (e.g., a non-ionic surfactant) (e.g., a cationic quarternary ammonion compound (e.g., cetylpyridinium chloride (e.g., Ammonyx)) (e.g., alkyl dimethyl benzylammonium chloride (e.g., BTC-835)) (e.g., an amphoteric surfactant (e.g., KDC-3) (e.g., amphoteric LH)), a hydrotrope (e.g., sodium xylene sulfonate), and a dye (e.g., tartrazine (dye key acid tart yellow)) (e.g., blue dye) (e.g., green grams). The pre-milking udder preparation solution may further comprise an emollient (e.g., propylene glycol) (e.g., urea). The pre-milking udder preparation solutions are not limited to particular ingredient parameters (e.g., amounts relative to other ingredients, concentrations, pH levels, dilution amounts, etc.).

Post-milking teat solutions may be generated by combining the ECAcept Concentrate with water, a detergent polymer (e.g., Acusol), citric acid, a surfactant (e.g., tomadol ethoxylate) (e.g, an ionic surfactant) (e.g., a non-ionic surfactant) (e.g., a cationic quarternary ammonion compound (e.g., cetylpyridinium chloride (e.g., Ammonyx)) (e.g., alkyl dimethyl benzylammonium chloride (e.g., BTC-835)) (e.g., an amphoteric surfactant (e.g., KDC-3) (e.g., amphoteric LH)), an emollient (e.g., propylene glycol) (e.g., urea), a sequestration agent (e.g., chelating agent (e.g., versene 100 / sequestrene 30A)) (e.g., potassium hydroxide (e.g., caustic potash)) (e.g., sodium hydroxide (e.g., caustic soda)) (e.g., magnesium hydroxide (e.g., flogel)), and a dye (e.g., tartrazine (dye key acid tart yellow)) (e.g., blue dye) (e.g., green grams). The post-milking teat solution may further comprise a polyvinyl alcohol (e.g., celvol 205-S). The post-milking teat solutions are not limited to particular ingredient parameters (e.g., amounts relative to other ingredients, concentrations, pH levels, dilution amounts, etc.).

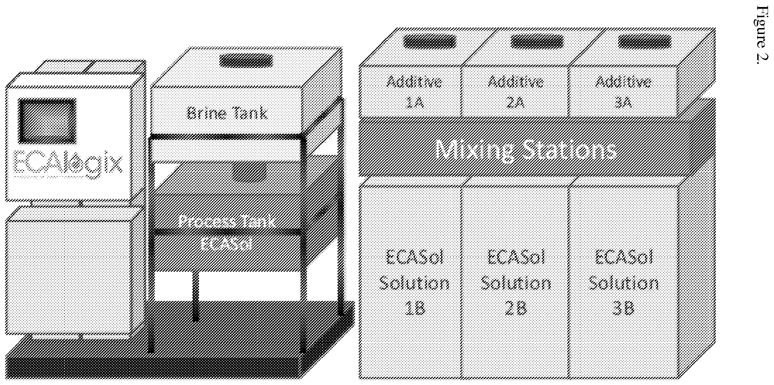

There is no limitation to a particular technique for combining the ECAcept Concentrate with additional agents. The additional agents may be stored within the system that generates the ECAcept Concentrate. For example, Figure 2 shows a system for generating ECAcept Concentrate (see, e.g., Brine Tank and Process Tank), and combining it with additional agents (see, e.g., Additive 1A, Additive 2A, and Additive 3A) via the mixing station to create modified EACcept Concentrate (see, e.g., 1B, 2B, 3B) (e.g., a pre-milking udder preparation solution; a post-milking teat solution). The additional agents may be stored within the system that generates the ECAcept Concentrate in a manner that permits combination with generated ECAcept Concentrate in a closed setting (e.g., thereby maintaining a controlled and/or a sterile setting) (e.g., the system shown in Figure 2). The additional agents may be stored in a manner compatible with RFID technology (e.g., the additional agent container if flagged with an RFID tag) and the system is has RFID tags. The system may be configured to operate only if the RFID tags match in a desired manner (e.g., additional agents stored in a manner not having RFID tag matching with the system RFID tag results in non-system operation). The system may be configured such that generation of ECAcept Concentrate and combination with additional agents occurs within the same setting (e.g., the same location). The system may be configured such that generation of ECAcept Concentrate and combination with additional agents occurs at different locations. Generation of a modified ECAcept Concentrate (e.g., a pre-milking udder preparation solution; a post-milking teat solution) may be controlled by a user prior to generation of ECAcept Concentrate. Generation of a modified ECAcept Concentrate (e.g., a pre-milking udder preparation solution; a post-milking teat solution) may be controlled by a user following generation of ECAcept Concentrate. Generation of a modified ECAcept Concentrate may physically be accomplished by a user. Generation of a modified ECAcept Concentrate may occur automatically (e.g., user-free).

Described are systems configured to generate ECAcept Concentrate and/or modified ECAcept Concentrate (e.g., a pre-milking udder preparation solution; a post-milking teat solution). The system may comprise a sodium chloride solution, water, an electrolytic cell, and chamber for collecting / storing generated ECAcept Concentrate. The system may comprise a sodium chloride solution, water, an electrolytic cell, additional agents for generating modified ECAcept Concentrate, and a chamber for collecting / storing generated ECAcept Concentrate and/or modified ECAcept Concentrate. All aspects of the system may be controllable by a user. For example, the amount of ECAcept Concentrate and/or modified ECAcept Concentrate (e.g., over a period of time) may be controlled, the particular concentrations (e.g., PPM of FAC) may be controlled. In addition, the amount of additional agents to use when generating modified ECAcept Concentrate (e.g., a pre-milking udder preparation solution; a post-milking teat solution) may be controlled so as to generate a precisely desired end product. The system may have a processor (e.g., a computer interface) (e.g., an algorithm) for facilitating such control. The processor may be compatible with html5 or higher format. The system may be controlled either on-site or off-site (e.g., via wireless (e.g., Wi-Fi) interaction). The system may be controlled via an application (e.g., a downloadable phone application). The system may be configured to present data to a user (e.g., concentration levels of particular ECAcept Concentrate solutions and/or modified ECAcept Concentrate solutions) (e.g., amounts of particular ECAcept Concentrate solutions and/or modified ECAcept Concentrate solutions) (e.g., warnings as to particular ECAcept Concentrate solutions and/or modified ECAcept Concentrate solutions (e.g., warnings that amounts are too high or low)) (e.g., sterility contaminations). The system may be programmable to automatically generate desired ECAcept Concentrate and/or modified ECAcept Concentrate solutions (e.g., programmed to automatically generate more solution upon the occurrence of certain events (e.g., stored amounts reaching particular levels, elapsing of a particular time-span, etc.)). The system may be configured to monitor the generation of ECAcept Concentrate and/or modified ECAcept concentrate to ensure proper generation according to programmed parameters and/or to ensure quality control. The system may further be configured to store generated ECAcept Concentrate and/or modified ECAcept Concentrate in a controlled and/or sterile manner, in any desired amount, for any extended amount of time. The system may further be configured to store generated ECAcept Concentrate and/or modified ECAcept Concentrate in a tightly controlled manner, in any desired amount, for any extended amount of time. The system may further be configured to store multiple solutions of ECAcept Concentrate, modified ECAcept Concentrate, and/or additional agents at any given time. The system may further be configured to dispense generated ECAcept Concentrate and/or modified ECAcept Concentrate in a controlled and/or sterile manner, in any desired amount, for any extended amount of time. The systems may further be configured to dispense generated ECAcept Concentrate and/or modified ECAcept Concentrate in a tightly controlled manner, in any desired amount, for any extended amount of time. Described are methods for generating ECAcept Concentrate and/or modified ECAcept Concentrate (e.g., a pre-milking udder preparation solution; a post-milking teat solution) with such a system.

## Claims

1. Use of a closed system for providing and on-site creating of a germicidal composition, said system comprising a sodium chloride solution mixed with water, an electrolytic cell, additional agents, and at least one chamber, wherein the electrolytic cell is configured to generate the germicidal composition comprising a combination of chlorine, hypochlorine, hypochlorous acid and chlorine dioxide,
wherein the electrolytic cell is configured to
a) receive the sodium chloride solution mixed with water,
b) remove hydrogen from said sodium chloride solution mixed with water through electro-chemical energy conversion,
c) generate the germicidal composition, wherein said chamber is configured to receive said germicidal composition generated with said electrolytic cell, wherein said additional agents are stored in a manner permitting combination of said generated germicidal composition with any combination of said two or more additional agents, said combination being configured to occur automatically, for the preparation of a germicidal pre-milking udder composition, said additional agents being water, a detergent polymer, a surfactant, a hydrotrope, and a dye, or for the preparation of a germicidal post-milking teat composition, said additional agents being water, a detergent polymer, citric acid, a surfactant, an emollient, a sequestration agent, and a dye.

2. Use of claim 1, wherein a sterile setting is maintained.

3. Use of Claim 1, wherein said system is configured to provide any programmed amount of said additional agents for purposes of combination.

4. Use of Claim 1, the system further comprising a processor running an algorithm, wherein said algorithm is configured to regulate said generation of said germicidal composition, wherein said algorithm is configured to regulate said combination of said germicidal composition with said additional agents.

5. A method for generating compositions comprising germicidal pre-milking udder or post-milking teat compositions combined with additional agents with a system as defined in Claim 1, wherein said additional agents are water, a detergent polymer, a surfactant, a hydrotrope, and a dye, wherein said combination generates a composition configured for pre-milking udder preparation purposes, or wherein said additional agents are water, a detergent polymer, citric acid, a surfactant, an emollient, a sequestration agent, and a dye, wherein said combination generates a composition configured for post-milking teat purposes.

## Patentansprüche

1. Verwendung eines geschlossenen Systems zum Bereitstellen und zum örtlichen Erzeugen einer keimtötenden Zusammensetzung, wobei das System eine mit Wasser gemischte Natriumchloridlösung, eine elektrolytische Zelle, zusätzliche Agenzien und wenigstens eine Kammer umfasst, wobei die elektrolytische Zelle konfiguriert ist, um die keimtötende Zusammensetzung umfassend eine Kombination aus Chlor, Hypochlorit, hypochloriger Säure und Chlordioxid zu erzeugen,
wobei die elektrolytische Zelle konfiguriert ist, um
a) die mit Wasser gemischte Natriumchloridlösung aufzunehmen,
b) Wasserstoff aus der mit Wasser gemischten Natriumchloridlösung durch elektrochemische Energieumwandlung zu entfernen,
c) die keimtötende Zusammensetzung zu erzeugen,
wobei die Kammer konfiguriert ist, um die mit der elektrolytischen Zelle erzeugte keimtötende Zusammensetzung aufzunehmen, wobei die zusätzlichen Agenzien in einer Weise gelagert sind, die eine Kombination der erzeugten keimtötenden Zusammensetzung mit jeder Kombination der zwei oder mehreren zusätzlichen Agenzien ermöglicht, wobei die Kombination konfiguriert ist, um automatisch zu erfolgen, wobei die zusätzlichen Agenzien für die Herstellung einer keimtötenden Vormelk-Euter Zusammensetzung Wasser, ein Reinigungspolymer, ein grenzflächenaktiver Stoff, ein Hydrotrop und ein Farbstoff sind oder wobei die zusätzlichen Agenzien für die Herstellung einer keimtötenden Nachmelk-Zitzen Zusammensetzung Wasser, ein Reinigungspolymer, Zitronensäure, ein grenzflächenaktiver Stoff, ein Weichmacher, ein Sequestrationsmittel und ein Farbstoff sind.

2. Verwendung nach Anspruch 1, wobei eine sterile Umgebung gewahrt wird.

3. Verwendung nach Anspruch 1, wobei das System konfiguriert ist, um jede programmierte Menge der zusätzlichen Agenzien zu Kombinationszwecken bereitzustellen.

4. Verwendung nach Anspruch 1, wobei das System weiter einen Prozessor, der einen Algorithmus ausführt, umfasst, wobei der Algorithmus konfiguriert ist, um die Erzeugung der keimtötenden Zusammensetzung zu regulieren, wobei der Algorithmus konfiguriert ist, um die Kombination der keimtötenden Zusammensetzung mit den zusätzlichen Agenzien zu regulieren.

5. Verfahren zum Erzeugen von Zusammensetzungen, umfassend keimtötende Vormelk-Euter oder Nachmelk-Zitzen Zusammensetzungen, die mit zusätzlichen Agenzien mit einem wie in Anspruch 1 definierten System kombiniert sind, wobei die zusätzlichen Agenzien Wasser, ein Reinigungspolymer, ein grenzflächenaktiver Stoff, ein Hydrotrop und ein Farbstoff sind, wobei die Kombination eine Zusammensetzung erzeugt, die für Vormelk-Euter Herstellungszwecke konfiguriert ist, oder wobei die zusätzlichen Agenzien Wasser, ein Reinigungspolymer, Zitronensäure, ein grenzflächenaktiver Stoff, ein Weichmacher, ein Sequestrationsmittel und ein Farbstoff sind, wobei die Kombination eine Zusammensetzung erzeugt, die für Nachmelk-Zitzen Zwecke konfiguriert ist.

## Revendications

1. Utilisation d'un système fermé pour fournir et créer sur place une composition germicide, ledit système comprenant une solution de chlorure de sodium mélangée avec de l'eau, une cellule électrolytique, des agents supplémentaires et au moins une chambre, où la cellule électrolytique est configurée pour générer la composition germicide comprenant une combinaison de chlore, d'hypochlorite, d'acide hypochloreux et de dioxyde de chlore,
dans laquelle la cellule électrolytique est configurée
a) pour recevoir la solution de chlorure de sodium mélangée avec de l'eau,
b) pour éliminer l'hydrogène de ladite solution de chlorure de sodium mélangée avec de l'eau par conversion d'énergie électrochimique,
c) pour générer la composition germicide, où ladite chambre est configurée pour recevoir ladite composition germicide générée avec ladite cellule électrolytique, où lesdits agents supplémentaires sont stockés de manière à permettre une combinaison de ladite composition germicide générée avec une combinaison quelconque desdits deux agents ou plus supplémentaires, ladite combinaison étant configurée pour se produire automatiquement, pour la préparation d'une composition germicide pour mamelles avant la traite, lesdits agents supplémentaires étant l'eau, un polymère détergent, un tensioactif, un hydrotrope et un colorant, ou pour la préparation d'une composition germicide pour trayons après la traite, lesdits agents supplémentaires étant l'eau, un polymère détergent, l'acide citrique, un tensioactif, un émollient, un agent de séquestration et un colorant.

2. Utilisation de la revendication 1, dans laquelle un établissement stérile est maintenu.

3. Utilisation de la revendication 1, dans laquelle ledit système est configuré pour fournir une quantité programmée quelconque desdits agents supplémentaires à des fins de combinaison.

4. Utilisation de la revendication 1, le système comprenant en outre un processeur exécutant un algorithme, où ledit algorithme est configuré pour réguler ladite génération de ladite composition germicide, où ledit algorithme est configuré pour réguler ladite combinaison de ladite composition germicide avec lesdits agents supplémentaires.

5. Procédé pour générer des compositions comprenant des compositions germicides pour mamelles avant la traite ou pour trayons après la traite combinées avec des agents supplémentaires avec un système tel que défini dans la revendication 1, où lesdits agents supplémentaires sont l'eau, un polymère détergent, un tensioactif, un hydrotrope, et un colorant, où ladite combinaison génère une composition configurée à des fins de préparation de mamelles avant la traite, ou où lesdits agents supplémentaires sont l'eau, un polymère détergent, l'acide citrique, un tensioactif, un émollient, un agent de séquestration et un colorant, où ladite combinaison génère une composition configurée à des fins d'application aux trayons après la traite.
